(19)

Europäisches
Patentamt
European
Patent Office
Office européen
des brevets

(11) **EP 3 783 544 A1**

(12) **EUROPEAN PATENT APPLICATION**
published in accordance with Art. 153(4) EPC

(43) Date of publication:
**24.02.2021 Bulletin 2021/08**

(51) Int Cl.:
***G06Q 10/00*** ^(2012.01)

(21) Application number: **18915242.4**

(22) Date of filing: **19.04.2018**

(86) International application number:
**PCT/JP2018/016073**

(87) International publication number:
**WO 2019/202694 (24.10.2019 Gazette 2019/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NISSAN MOTOR CO., LTD.
Yokohama-shi, Kanagawa 221-0023 (JP)**

(72) Inventor: **TANAKA Yasuhiro
Atsugi-shi, Kanagawa 243-0123 (JP)**

(74) Representative: **Osha Liang
2, rue de la Paix
75002 Paris (FR)**

(54) **MAINTENANCE RECORD CREATION DEVICE AND MAINTENANCE RECORD CREATION METHOD**

(57)     Provided is a device including a work history DB (11) configured to store work data of an apparatus such as a speed reducer (44) mounted on a manufacturing robot (40), and an abnormality determination circuit (22) configured to determine an abnormality of the apparatus according to the work data to notify a user of the abnormality having been determined. The device also includes a maintenance record creation circuit (24) configured to create a maintenance record indicating that maintenance has been made for the abnormality according to the work data. The maintenance record is automatically created, so as to reduce a workload of the user upon the creation of the maintenance record. This can prevent an error upon the creation such as failing to create the maintenance record or making clerical errors.

FIG. 2

**Description**

TECHNICAL FIELD

The present invention relates to a maintenance record creation device and a maintenance record creation method for creating a maintenance record of an apparatus.

BACKGROUND ART

In order to prevent a shutdown or an accident caused by an abnormality, maintenance records are created and managed on apparatuses such as robots installed in manufacturing factories or assembling factories when operations of maintenance such as repairs, replacement of components, and application of a lubricant are executed. Each maintenance record is typically created such that a user saves the contents of the maintenance having been made as a record.

Patent Document 1 discloses a technique that determines the timing to replace various kinds of expendable components depending on a traveling distance of a vehicle to notify the user of the replacement timing so as to assist the user to replace the expendable components at an appropriate timing. Patent Document 1, however, fails to teach how to keep records when actually replacing the expendable components. The maintenance records manually created by the user have a problem that the operations upon the creation require a great deal of work.

CITATION LIST

PATENT LITERATURE

Patent Document 1: Japanese Unexamined Patent Application Publication No. 2003-137079

SUMMARY OF INVENTION

As described above, the conventional technique requires the user to create the maintenance records when executing the maintenance of the apparatus, which still has a problem of a great deal of work required for the user.

In view of the foregoing problem, the present invention provides a maintenance record creation device and a maintenance record creation method capable of automatically creating a maintenance record so as to reduce a workload of a user.

An aspect of the present invention includes a work data storage unit configured to store work data of an apparatus, an abnormality determination unit configured to determine an abnormality of the apparatus according to the work data to notify a user of the abnormality, and a maintenance record creation unit configured to create a maintenance record indicating that maintenance has been made for the abnormality.

ADVANTAGEOUS EFFECTS

The aspect of the present invention can automatically create the maintenance record, so as to reduce the workload of the user.

BRIEF DESCRIPTION OF DRAWINGS

[Fig. 1] Fig. 1 is a diagram illustrating a configuration of a maintenance record creation device and peripheral apparatuses according to a first embodiment of the present invention.
[Fig. 2] Fig. 2 is a block diagram illustrating a specific configuration of the respective peripheral apparatuses illustrated in Fig. 1, and a CPU of which the respective functions are implemented by hardware.
[Fig. 3] Fig. 3 is a flowchart showing a process of outputting an abnormality determination alarm executed by the maintenance record creation device according to the first embodiment of the present invention.
[Fig. 4] Fig. 4 is a flowchart showing a process of maintenance executed by a user when the abnormality determination alarm is output.
[Fig. 5] Fig. 5 is a flowchart showing a process of creating a maintenance record executed by the maintenance record creation device according to the first embodiment of the present invention.
[Fig. 6] Fig. 6 is an explanatory diagram showing an example of a confirmation image of the maintenance record.
[Fig. 7] Fig. 7 is an explanatory diagram illustrating the type of abnormalities and the contents of maintenance executed for the corresponding abnormalities.
[Fig. 8] Fig. 8 is a configuration diagram illustrating a maintenance record creation device according to a second embodiment of the present invention.
[Fig. 9] Fig. 9 is a configuration diagram illustrating a maintenance record creation device according to a third embodiment of the present invention.

DESCRIPTION OF EMBODIMENTS

Embodiments of the present invention will be described below with reference to the drawings.

[Explanations of First Embodiment]

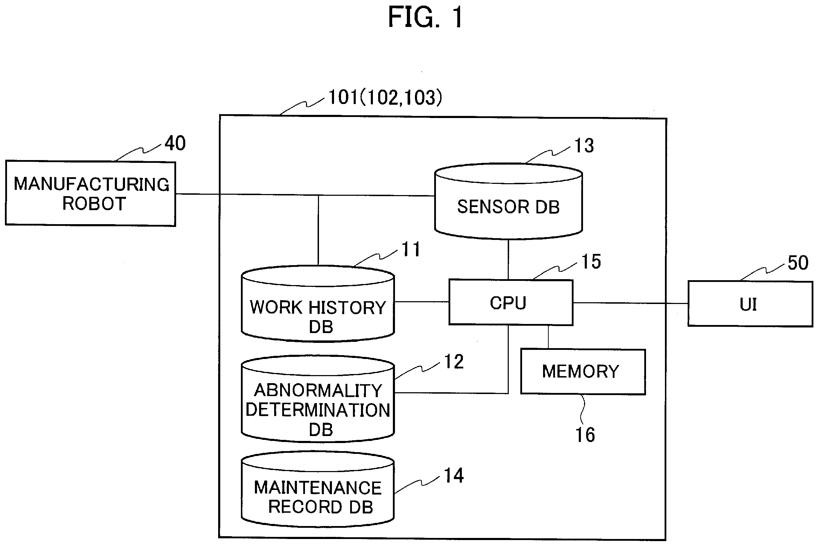

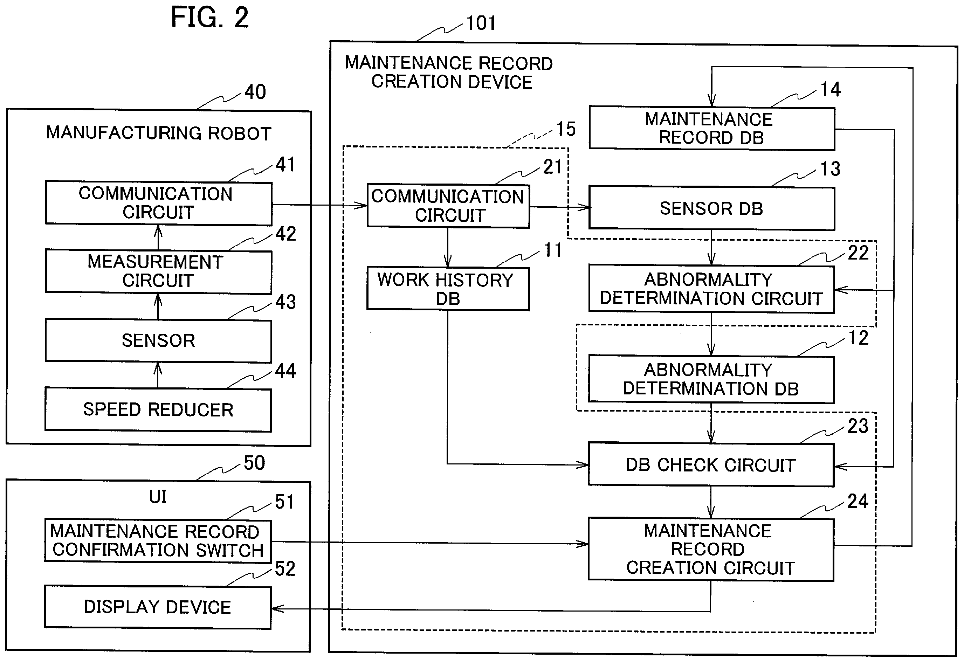

A maintenance record creation device 101 according to a first embodiment is described below with reference to Fig. 1 and Fig. 2. As illustrated in Fig. 1, the maintenance record creation device 101 is connected to a manufacturing robot 40 and a user interface 50 (indicated by reference sign "UI" in Fig. 1).
The maintenance record creation device 101 can be an integrated computer, for example, and includes a CPU 15 for executing calculation processing, a memory 16 for storing various kinds of data and a computer program, and various types of databases. The databases (DBs) include a work history DB 11 (a work data storage unit), an abnormality determination DB 12, a sensor DB 13, and a maintenance record DB 14 (a maintenance record database).

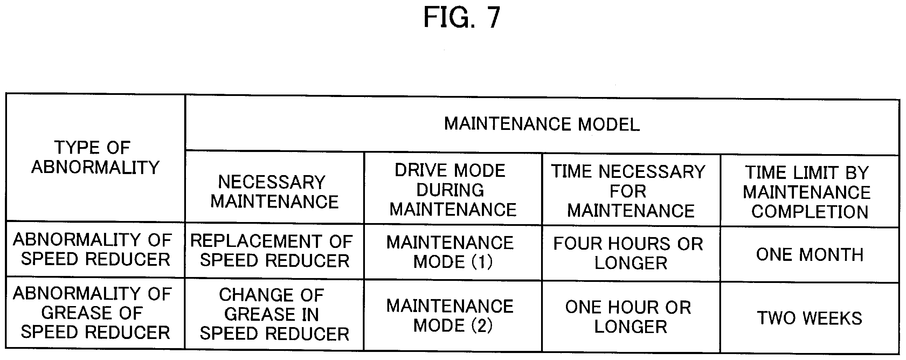

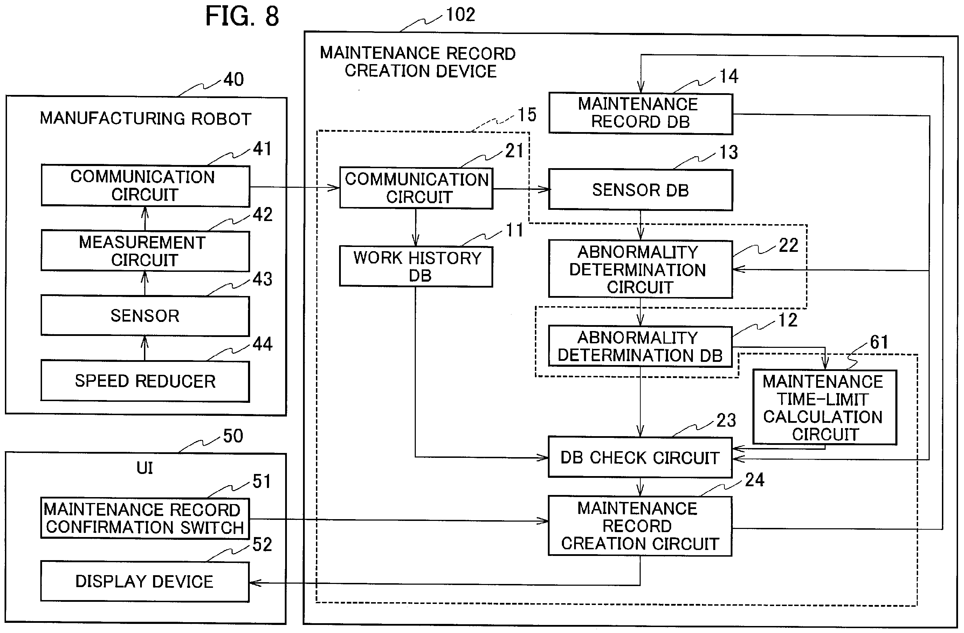

The maintenance record creation device 101 causes the CPU 15 to execute control processing according to the computer program and the various kinds of data stored in the memory 16 so as to perform the information processing calculation. The maintenance record creation device 101 can implement the respective functions of a communication circuit 21, an abnormality determination circuit 22, a DB check circuit 23, and a maintenance record creation circuit 24, as illustrated in Fig. 2 described below. A maintenance record creation device according to a second embodiment described below can further implement the function of a maintenance time-limit calculation circuit 61 (refer to Fig. 7). A maintenance record creation device according to a third embodiment described below can implement the function of a necessary-time calculation circuit 62 (refer to Fig. 8).

As used herein, the term "abnormality" encompasses various factors causing failures of an apparatus and impeding normal operations, such as a shutdown of the apparatus, a trouble of operation of the apparatus, and degradation of a lubricant.

The explanations of the manufacturing robot 40, the user interface 50, and the maintenance record creation device 101 are made in detail below with reference to Fig. 2.

As illustrated in Fig. 2, the manufacturing robot 40 includes speed reducers 44 each including a motor to work, a sensor 43 mounted on each speed reducer 44, a measurement circuit 42, and a communication circuit 41.

The sensor 43 detects a value of torque caused in the motor mounted on the speed reducer 44 or a density of iron powder in grease applied to the motor, and outputs the detection results as sensor data. The sensor data is sent to the maintenance record creation device 101. While the present embodiment is illustrated with the speed reducer 44 as an example of an apparatus mounted on the manufacturing robot 40, the present invention is not limited to this example.

The measurement circuit 42 calculates a difference between the torque value of the motor of the speed reducer 44 detected by the sensor 43 and a control value of the motor (the difference is referred to as a "disturbance torque"). The measurement circuit 42 further acquires work data of the speed reducer 44 in accordance with a control signal for controlling the speed reducer 44 and the torque value detected by the sensor 43. The work data includes various kinds of data regarding the work of the reducer 44, such as work date, a work-started time, a work-stopped time, a continuous operating time, and a continuous suspension time. The work data also includes data regarding the operations of the respective speed reducers 44 mounted on the manufacturing robot 40 and data regarding a stop position of the motor. The work data includes a drive mode of the manufacturing robot 40. As described below, the drive mode includes a normal drive mode, a maintenance mode, and a stop mode.

The measurement circuit 42 also acquires maintenance data indicating that the maintenance (such as a repair, a replacement, and a change of a lubricant) is executed for the corresponding speed reducer 44 in the manufacturing robot 40.

The communication circuit 41 sends, to the maintenance record creation device 101, the torque value detected by the sensor 43, the sensor data such as the density of iron powder in the grease, the disturbance torque calculated by the measurement circuit 42, and the work data and the maintenance data acquired by the measurement circuit 42.

The user interface 50 has a function of operating several kinds of operations input by the user, and a function of presenting several kinds of data to the user. The user interface 50 is a tablet terminal device, for example, and includes a maintenance record confirmation switch 51 that receives the confirmation operation from the user when confirming the maintenance record, and a display device 52 that displays the maintenance record described in detail below, and other data.

The maintenance record creation device 101 includes the communication circuit 21, the abnormality determination circuit 22 (an abnormality determination unit), the DB check circuit 23, and the maintenance record creation circuit 24 (a maintenance record creation unit). As illustrated in Fig. 1, the maintenance record creation device 101 further includes the work history DB 11, the sensor DB 13, the maintenance record DB 14, and the abnormality determination DB 12. The respective functions of the communication circuit 21, the abnormality determination circuit 22, the DB check circuit 23, and the maintenance record creation circuit 24 may be implemented by programs so as to cause the CPU 15 shown in Fig. 1 to execute the respective programs.

The communication circuit 21 communicates with the communication circuit 41 of the manufacturing robot 40. The communication unit 21 receives the sensor data detected by the sensor 43 and the disturbance torque calculated by the measurement unit 42 to output the data to the sensor DB 13. The communication unit 21 also receives the work data of the speed reducer 44 to output the data to the work history DB 11. The communication unit 21 also receives the maintenance data of the speed reducer 44 to output the data to the maintenance record DB 14.

The work history DB 11 (the work data storage circuit) stores the work data of the manufacturing robot 40. The work history DB 11 also stores the drive mode of the manufacturing robot 40. The drive mode includes the normal drive mode in which the manufacturing robot 40 operates in a normal state, the stop mode (another drive mode) in which the manufacturing robot 40 is kept in a stopped state, and the maintenance mode (still another drive mode) in which the manufacturing robot 40 is kept in the stopped state while being ready to be maintained.

The sensor DB 13 acquires and stores the sensor data detected by the sensor 43 provided at the speed reducer 44. The sensor data includes the torque value of the speed reducer 44, for example. The sensor DB 13 also stores the disturbance torque calculated by the measurement circuit 42.

The maintenance record DB 14 matches the condition of the abnormality of the speed reducer 44 with the contents of the maintenance actually made so as to store as maintenance record data. When the occurrence of the abnormality is detected or predicted in the gear of the speed reducer 44 by the abnormality determination circuit 22 described below, and the maintenance of the speed reducer 44 is then executed, for example, the maintenance record DB 14 stores the date, the time, and the necessary time of the maintenance executed, the period of time during which the speed reducer 44 has been stopped, the operating condition when operating the speed reducer 44 for the maintenance, and the drive mode of the manufacturing robot 40. The data on the density of iron powder in the grease is also included in the maintenance record. The maintenance record DB 14 thus stores the data on the maintenance having been made before. When the maintenance record is created by the maintenance record creation circuit 24 described below, the maintenance record DB 14 stores this created maintenance record.

The maintenance record DB 14 also stores a maintenance map in which the respective types of abnormalities are matched with the contents of the maintenance for the corresponding abnormalities. Fig. 7 is an example of the maintenance map in which the types of abnormalities caused in the speed reducer 44 are matched with the corresponding maintenance models. For example, when the occurrence of an abnormality is detected or predicted in one speed reducer 44 and the corresponding speed reducer 44 thus needs to be replaced, the drive mode upon the maintenance is set to "maintenance mode (1)". When the grease in the speed reducer 44 needs to be changed, the drive mode upon the maintenance is set to "maintenance mode (2)".

The time necessary for the maintenance is set to four hours or longer when the speed reducer 44 needs to be replaced, and the time necessary for the maintenance is set to one hour or longer when the grease needs to be changed. The time limit by the completion of the maintenance is set to one month when the speed reducer 44 needs to be replaced, and the time limit by the completion of the maintenance is set to two weeks when the grease needs to be replaced. The user inputs the maintenance map with the user interface 50. The maintenance map is also used for the creation of the maintenance record as described below.

The term "maintenance" as used herein refers to the process of work performed on a speed reducer in which an abnormality has been caused or the occurrence of an abnormality is predicted so as to ensure smooth operations such as the replacement or the repair of the speed reducer, the replacement of components, and the application of a lubricant.

The abnormality determination circuit 22 illustrated in Fig. 2 detects or predicts an abnormality caused in the respective speed reducers 44 mounted on the manufacturing robot 40, in accordance with the disturbance torque and the respective pieces of the sensor data stored in the sensor DB 13, and the records of the maintenance having been made and stored in the maintenance record DB 14. The abnormality determination circuit 22 designates the corresponding speed reducer 44 (the apparatus) in which the occurrence of the abnormality is detected or predicted as an abnormality target apparatus.

For example, when a disturbance torque is detected equivalent to the disturbance torque previously caused upon the maintenance made when an abnormality was caused in one speed reducer 44, and matched with the contents of the previous maintenance so as to be stored in the maintenance record DB 14 described above, the abnormality determination circuit 22 determines that the abnormality is caused in the corresponding speed reducer 44 or a probability is high that the abnormality will be caused, and designates the corresponding speed reducer 44 as an abnormality target apparatus. The abnormality determination circuit 22 then stores the data on the abnormality target apparatus in the abnormality determination DB 12.

The abnormality determination circuit 22, when designating the abnormality target apparatus, executes the processing of outputting the information on the abnormality target apparatus to the user interface 50. The information on the abnormality target apparatus is then displayed on the display device 52. Namely, the abnormality determination circuit 22 notifies the user that the abnormality target apparatus is present.

As described above, the abnormality determination circuit 22 has the function of determining that the abnormality is actually caused or the probability is high that the abnormality can be caused later.

The abnormality determination DB 12 stores the data on the abnormality target apparatus designated by the abnormality determination circuit 22.

The DB check circuit 23 determines whether the maintenance of the abnormality target apparatus has been made in accordance with the abnormality target apparatus stored in the abnormality determination DB 12, the work history of the manufacturing robot 40 output from the work history DB 11, and the maintenance map stored in the maintenance record DB 14. For example, when a "speed reducer A" is designated as an abnormality target apparatus, and the operation, the stopped time, and the drive mode for the maintenance of the "speed reducer A" can be read from the work history, the DB check circuit 23 determines that the maintenance of the "speed reducer A" has been made.

In particular, as shown in the maintenance map illustrated in Fig. 7, when the "speed reducer A" has been operated for four hours or longer in the maintenance mode (1), and the time elapsed since the abnormality has been detected is within one month, the DB check circuit 23 determines that the maintenance for replacing the "speed reducer A" has been made.

The maintenance record creation circuit 24 determines whether the maintenance record has been stored in the maintenance record DB 14 with regard to the abnormality target apparatus determined by the DB check circuit 23 to have been maintained. The maintenance record creation circuit 24 creates the maintenance record, when not created, indicating that the maintenance of the abnormality target apparatus has been made. The maintenance record creation circuit 24 sends the created maintenance record to the display device 52 of the user interface 50.

When the user operates the maintenance record confirmation switch 51 so as to input a signal indicating that the maintenance has been made, the maintenance record is stored in the maintenance record DB 14. When the signal indicating that the maintenance has been made is not input, the maintenance record is not stored. In other words, when the maintenance record is created by the maintenance record creation circuit 24, the user makes the final determination of whether the maintenance record is correct or incorrect, and the maintenance record when determined to be correct is thus stored in the maintenance record DB 14.

[Explanations of Operation of First Embodiment]

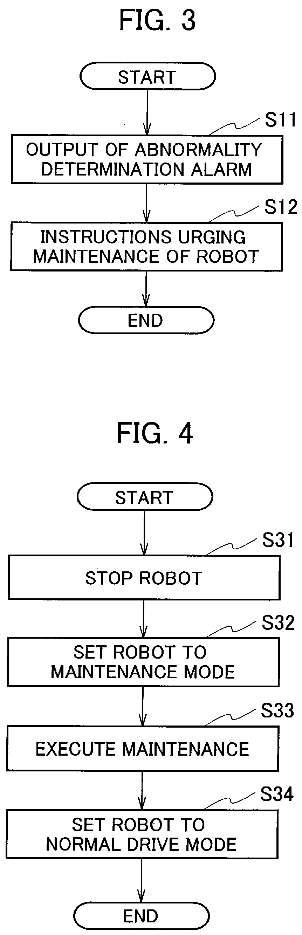

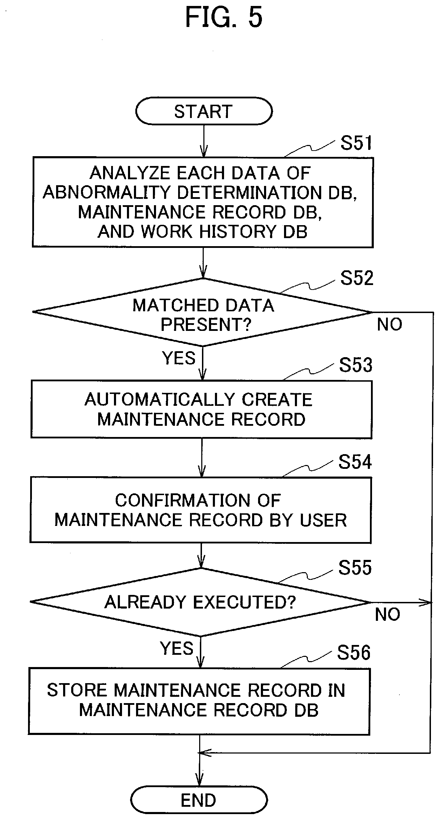

The operation of the present embodiment is described below. Fig. 3 is a flowchart showing a process of outputting an abnormality determination alarm for notifying the occurrence of an abnormality by the maintenance record creation device 101 according to the first embodiment. Fig. 4 is a flowchart showing a process of operations performed by the user on the manufacturing robot 40 when the abnormality determination alarm is output. Fig. 5 is a flowchart showing a processing process of creating the maintenance record made by the maintenance record creation device 101.

First, in step S11 in Fig. 3, the abnormality determination circuit 22 illustrated in Fig. 2 determines the presence or absence of the apparatus (the abnormality target apparatus) in which an abnormality has been caused or the occurrence of an abnormality is predicted, in accordance with the disturbance torque stored in the sensor DB 13 and the maintenance data stored in the maintenance record DB 14. The abnormality determination circuit 22 outputs an alarm signal to the display device 52 when the abnormality target apparatus is present. For example, when the disturbance torque of the motor mounted on the speed reducer 44 is excessively high and exceeds the disturbance torque caused upon the past maintenance, the alarm signal is output since the abnormality is caused or the occurrence of the abnormality is predicted in the motor. The user is thus notified of the abnormality target apparatus determined.

In step S12, the abnormality determination circuit 22 provides the user with the instructions that the manufacturing robot 40 needs to be maintained. In particular, the abnormality determination circuit 22 causes the display device 52 illustrated in Fig. 2 to display the name of the apparatus to be maintained and the contents of the maintenance.

When the instructions urging the maintenance are output, the user sets the manufacturing robot 40 to the stop mode in step S31 in Fig. 4. The manufacturing robot 40 is then stopped.

In step S32, the user then sets the manufacturing robot 40 to the maintenance mode. The maintenance mode causes the target speed reducer 44 of the manufacturing robot 40 to operate so as to facilitate the maintenance of the target speed reducer 44. The maintenance mode is not the necessary operation, and may be set as appropriate.

In step S33, the user executes the maintenance. The maintenance to be made includes a replacement of the motor mounted on the speed reducer 44, a repair of components, and a change of grease, for example.

After the maintenance is completed, the user sets the manufacturing robot 40 to the normal drive mode in step S34. The manufacturing robot 40 having been maintained thus starts operating in the normal drive mode. Setting to the normal drive mode can indicate the confirmation that the maintenance is completed.

The operations described with reference to Fig. 3 and Fig. 4 are stored in the maintenance record DB 14 as the maintenance data indicating that the maintenance of the manufacturing robot 40 has been made. Namely, the maintenance data is stored in the maintenance record DB 14 when the manufacturing robot 40 is stopped to execute the maintenance.

The process of creating the maintenance record by the maintenance record creation device 101 is described below with reference to the flowchart shown in Fig. 5.

First, in step S51, the DB check circuit 23 analyzes the data stored in each of the work history DB 11, the abnormality determination DB 12, and the maintenance record DB 14.

In step S52, the DB check circuit 23 acquires the work data of the abnormality target apparatus from the work history DB 11, and refers to the maintenance map (Fig. 7) stored in the maintenance record DB 14 so as to determine whether the matched data is present. For example, the DB check circuit 23 determines that the matched data is present, in accordance with the work data of the speed reducer 44 designated as the abnormality target apparatus, when the speed reducer 44 is operated in the maintenance mode (1), the work time in the maintenance mode (1) is four hours or longer, and the work in the maintenance mode (1) is within one month since the occurrence of the abnormality. The DB check circuit 23 in this case determines that the replacement of the corresponding speed reducer 44 has been made.

When the matched data is present (YES in step S52), the maintenance record creation circuit 24 then determines whether the maintenance record regarding this maintenance is stored in the maintenance record DB 14 in step S53, namely, determines whether the maintenance record has already been created. The maintenance record creation circuit 24 determines that the maintenance record, if not being stored yet, has not been created, and automatically creates the maintenance record indicating that the maintenance of the corresponding speed reducer 44 has been made. The process then proceeds to step S54.

When the matched data is determined not to be present (NO in step S52), the maintenance record creation circuit 24 determines that the maintenance of the speed reducer 44 for the abnormality has not been made yet, and the process then ends.

In step S54, the maintenance record creation circuit 24 sends the maintenance record created in the processing in step S53 to the display device 52 of the user interface 50 so as to urge the user to confirm the maintenance record. In other words, the maintenance record creation circuit 24 outputs a storage confirmation notification urging to store the created maintenance record in the maintenance record DB 14. Since the maintenance record is displayed on the display device 52, the user inputs the determination of whether the maintenance has actually been made through the maintenance record confirmation switch 51. In particular, the user operates the maintenance record confirmation switch 51 to input the data indicating either "maintenance completed" or "maintenance uncompleted".

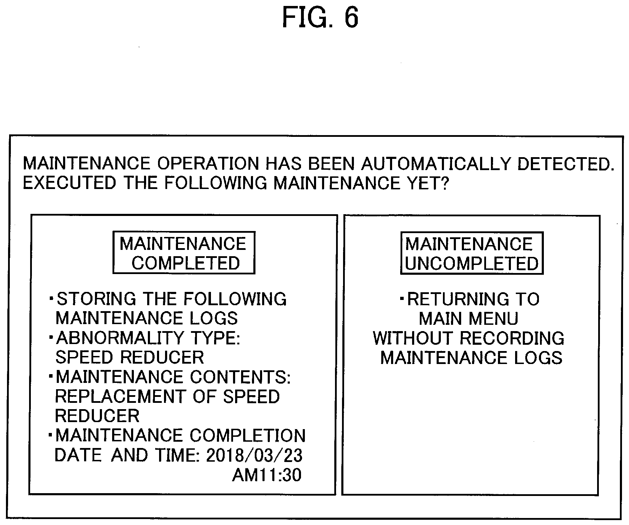

Fig. 6 shows an example of the screen displayed on the display device 52 in step S54. The display device 52 displays two icons indicating the titles "maintenance completed" and "maintenance uncompleted", and also displays the type of the abnormality detected and the maintenance record automatically created (the contents of the maintenance and the maintenance completion date and time) together with the icon of "maintenance completed". The display device 53 is provided with a touch panel. When the operator touches the icon indicating "maintenance completed" in step S55, the displayed maintenance record is stored in the maintenance record DB 14.

The maintenance record is preferably displayed when the drive mode is shifted from the maintenance mode or the stop mode to the normal drive mode, namely, when the manufacturing robot 40 starts operating again.

Alternatively, the created maintenance record may be stored in the maintenance record DB 14 without urging the user to confirm the maintenance record. In such a case, a storage completion notification for notifying the user that the maintenance record has been stored in the maintenance record DB 14 is output to be displayed on the display device 52.

In step S55, the maintenance record creation circuit 24 determines which item is operated, "maintenance completed" or "maintenance uncompleted", with the maintenance record confirmation switch 51. When the item "maintenance completed" is input (YES in step S55), the maintenance record is stored in the maintenance record DB 14 in step S56.

When the item "maintenance uncompleted" is input (NO in step S55), the process ends without storing the maintenance record.

Namely, the user makes the final confirmation of the maintenance record created by the maintenance record creation circuit 24 so as to determine whether the maintenance has actually been made. The maintenance record automatically created is thus to be stored in the maintenance record DB 14.

As described above, the maintenance record creation device 101 according to the first embodiment can achieve the following effects.

When there is any speed reducer in which an abnormality is caused or in which the occurrence of an abnormality is predicted, the maintenance record creation device 101 reads out the work data of the corresponding speed reducer stored in the work history DB 11 (the work data record circuit), and determines whether the maintenance of the corresponding speed reducer has been made according to the work data. The maintenance record creation device 101 then creates the maintenance record in accordance with the determination result. The maintenance record creation device 101 thus can automatically create the maintenance record, so as to reduce the workload of the user and decrease the number of the steps necessary for the operations.

Since the maintenance record stored in the maintenance record DB 14 not only can be saved but also can be used for the abnormality determination for the apparatus afterward, the accuracy of the abnormality determination can be improved.

The maintenance record creation circuit 24 determines that the maintenance has been made when detecting that the corresponding speed reducer is shifted to the drive mode other than the normal drive mode, in accordance with the work data of the corresponding speed reducer, so as to create the maintenance record more accurately.

The maintenance record creation circuit 24 determines that the maintenance has been made when detecting that the corresponding speed reducer is shifted to the stop mode or the maintenance mode, in accordance with the work data of the corresponding speed reducer, so as to create the maintenance record more accurately.

The maintenance record created by the maintenance record creation circuit 24 is temporarily displayed on the display device 52 to urge the user to confirm the maintenance record, so as to obtain the final acknowledgement of the user to store the maintenance record. This can avoid an error upon the creation such as failing to create the maintenance record, making clerical errors, or duplicating the maintenance record.

When the maintenance record is automatically created, and the drive mode of the manufacturing robot 40 is shifted from the maintenance mode or the stop mode to the normal drive mode, the maintenance record is displayed on the display device 52 of the user interface 50, so as to immediately notify the user that the maintenance record has been created.

The detection or prediction of the occurrence of the abnormality in the respective speed reducers as an apparatus mounted on the manufacturing robot 40 can manage the maintenance of the speed reducers.

The maintenance includes the repair and the replacement of the respective speed reducers. Since the maintenance record is automatically created when an abnormality is caused in the speed reducer and the corresponding speed reducer is repaired or replaced, the maintenance record with a higher accuracy can be created upon the occurrence of the abnormality of the speed reducer.

[Explanations of Second Embodiment]

A second embodiment of the present invention is described below with reference to Fig. 8. As illustrated in Fig. 8, a maintenance record creation device 102 according to the second embodiment differs from that in the first embodiment described above in further including a maintenance time-limit calculation circuit 61 (a maintenance time-limit setting unit).

The maintenance record creation device 102 according to the second embodiment does not define the "time limit by the completion of the maintenance" in the maintenance map illustrated in Fig. 7. The other configurations are the same as those in the first embodiment described above with reference to Fig. 2. The same elements are denoted by the same reference numerals, and overlapping explanations are not repeated below.

The maintenance time-limit calculation circuit 61 executes the processing of calculating a time limit by which the maintenance for an abnormality is completed when the abnormality is detected or predicted in the speed reducer 44. For example, when the abnormality is detected or predicted in the speed reducer 44 mounted on the manufacturing robot 40, the time limit by the completion of the maintenance is set to two weeks or shorter or set to one month or shorter, for example, depending on the abnormality level indicating the degree of the abnormality of the speed reducer 44.

The abnormality level a(x'), where x' is the sensor data, can be given by the following formula (1), for example.

$$a(x') = \{(x' - m)^2\} / 2 \cdot s^2 \qquad \ldots (1)$$

where m is a sample average of the sensor data, and s is a standard deviation of the sensor data.

Since the urgency is higher as the abnormality level is greater, the maintenance time limit is set to be shorter. For example, when the grease in the speed reducer 44 is changed, the density of iron powder in the grease is detected, and the maintenance time limit is set depending on the level of the density of the iron powder. In particular, the maintenance time limit is set to be shorter when the level of the density of the iron powder is higher, since the grease needs to be changed shortly.

The DB check circuit 23 determines whether the maintenance has been made in accordance with the maintenance time limit calculated by the maintenance time-limit calculation circuit 61, in addition to the data stored in each of the work history DB 11, the maintenance record DB 14, and the abnormality determination DB 12, so as to cause the maintenance record to be created when determining that the maintenance has been made.

For example, the DB check circuit 23 determines that the maintenance of the speed reducer 44 has not been made yet when the maintenance has not been completed within the maintenance time limit (for example, within one month) calculated by the maintenance time-limit calculation circuit 61, regardless of the presence of the work data matched with the maintenance map with regard to the corresponding speed reducer 44.

When the maintenance time limit is set, the data on the maintenance time limit is displayed on the display device 52 so as to present the information to the user. For example, a message such as "Grease needs to be changed within 24 hours" is displayed, so as to immediately notify the user of the urgency of the operation.

As described above, the maintenance record creation device 102 according to the second embodiment sets the maintenance time limit by which the maintenance is completed depending on the type of the abnormality caused in the respective speed reducers mounted on the manufacturing robot 40. The maintenance time limit is calculated in accordance with the degree of the abnormality level. The maintenance record creation device 102 then determines whether the maintenance has been made within the maintenance time limit, and automatically creates the maintenance record in accordance with the determination result.

The maintenance time limit thus can be set accurately, so as to create the maintenance record with a higher accuracy.

[Explanations of Third Embodiment]

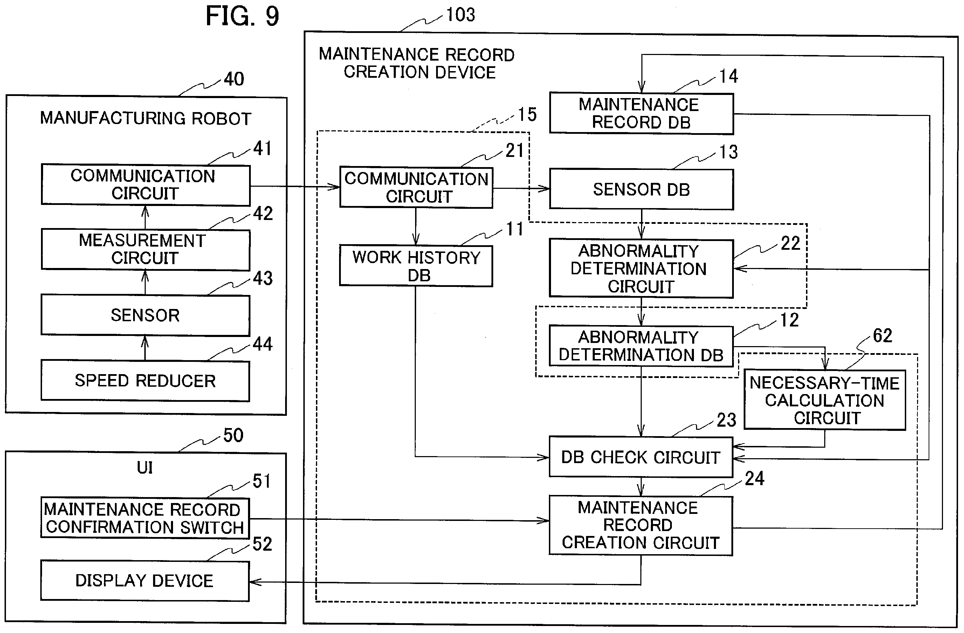

A third embodiment of the present invention is described below with reference to Fig. 9. As illustrated in Fig. 9, a maintenance record creation device 103 according to the third embodiment differs from that in the first embodiment described above in further including a necessary-time calculation circuit 62. The maintenance record creation device 103 according to the third embodiment does not define the "time necessary for maintenance" in the maintenance map illustrated in Fig. 7. The other configurations are the same as those in the first embodiment described above with reference to Fig. 2. The same elements are denoted by the same reference numerals, and overlapping explanations are not repeated below.

The necessary-time calculation circuit 62 executes the processing of calculating the time necessary for the maintenance of the speed reducer 44 (hereinafter referred to as a "necessary time") to be made for the abnormality when predicted in the speed reducer 44. For example, when one speed reducer 44 is designated as an abnormality target apparatus, the necessary time is calculated depending on the degree of the abnormality of the corresponding speed reducer 44. For example, the necessary time is set to four hours for the abnormality which requires the replacement of the speed reducer. The necessary time is set to two hours for the abnormality which requires the replacement of a component. The necessary time is set to 30 minutes for the abnormality equivalent to the case of degradation of grease.

When one speed reducer 44 is designated as an abnormality target apparatus, the DB check circuit 23 determines whether the maintenance of the corresponding speed reducer 44 has been made in accordance with the necessary time calculated by the necessary-time calculation circuit 62, in addition to the data stored in each of the work history DB 11, the maintenance record DB 14, and the abnormality determination DB 12. The maintenance record is then created in the same manner as in the first embodiment.

As described above, the maintenance record creation device 103 according to the third embodiment automatically creates the maintenance record in the same manner as in the first embodiment described above, so as to reduce the workload of the user. In addition, the maintenance record creation device 103 determines whether the maintenance has been made in accordance with the determination of whether the time used for the maintenance, which is the continuous operating time of the target apparatus continuously operated in the stop mode or in the maintenance mode, is the necessary time or longer, so as to create the maintenance record with a higher accuracy. Since the necessary time varies depending on the type or the way of use of the apparatus, the calculation for the necessary time by the necessary-time calculation circuit 62 may vary depending on the various conditions.

In addition, the maintenance record creation device 103 sets the necessary time required for the maintenance for each type of abnormalities caused in the respective apparatuses (the speed reducers 44) mounted on the manufacturing robot 40, and determines that the maintenance has been made when the continuous operating time in the maintenance mode or the stop mode (the other drive mode) exceeds the necessary time, so as to create the maintenance record with a higher accuracy.

The maintenance record creation device 103 acquires the sensor data detected by the various sensors of the respective apparatuses mounted on the manufacturing robot 40, and calculates the necessary time in accordance with the sensor data, so as to set the necessary time depending on the condition of the abnormality of the respective apparatuses. For example, the necessary time is set to be longer as the density of iron powder in the grease is higher. This can lead to the maintenance record created with a higher accuracy.

The abnormality determination circuit 22 notifies the user of the corresponding apparatus in which the abnormality is predicted, and notifies the user of the necessary time. For example, a phrase such as "Maintenance needs to be made within 24 hours" is displayed on the display device 52. The priority upon the maintenance thus can be clearly presented to the user.

The apparatus as a detection target regarding an abnormality is not limited to the manufacturing robot 40. For example, an engine of a vehicle instead of the motor or a transmission instead of the speed reducer 44 may be applicable as a target. Any apparatus including a rotating mechanism and a transmitting mechanism thereof can be a target to be detected, such as a rotating mechanism of a moving object, a moving object such as playground equipment in an amusement park, and a work machine such as a three-dimensional printer. Any other types of apparatus may also be a target to be detected.

The maintenance record creation device may be installed in a remote place to receive/send necessary signals or data via a communication line so as to detect an abnormality of the apparatus. The maintenance records of a plurality of apparatuses may be created by the single maintenance record creation device. The plural apparatuses may be arranged at different locations. The communication circuit 21, the abnormality determination circuit 22, the DB check circuit 23, and the maintenance record creation circuit 24, for example, may be implemented by a computer.

The respective functions described in the respective embodiments described above can be implemented in single or plural processing circuits. The respective processing circuits include a programmed processing device, such as a processing device including an electric circuit. The processing device includes an application-specific integrated circuit (ASIC) configured to execute the functions described in the above embodiments or conventional circuit components.

While the present invention has been described above by reference to the embodiments, it should be understood that the present invention is not intended to be limited to the descriptions and the drawings composing part of this disclosure. Various alternative embodiments, examples, and technical applications will be apparent to those skilled in the art according to this disclosure.

REFERENCE SIGNS LIST

11 WORK HISTORY DB (WORK DATA STORAGE UNIT)
12 ABNORMALITY DETERMINATION DB
13 SENSOR DB
14 MAINTENANCE RECORD DB
16 MEMORY
21,41 COMMUNICATION CIRCUIT
22 ABNORMALITY DETERMINATION CIRCUIT (ABNORMALITY DETERMINATION UNIT)
23 CHECK CIRCUIT
24 MAINTENANCE RECORD CREATION CIRCUIT (MAINTENANCE RECORD CREATION UNIT)
40 MANUFACTURING ROBOT
42 MEASUREMENT CIRCUIT
43 SENSOR
44 SPEED REDUCER
50 USER INTERFACE (UI)
51 MAINTENANCE RECORD CONFIRMATION SWITCH
52 DISPLAY DEVICE
61 MAINTENANCE TIME-LIMIT CALCULATION CIRCUIT (MAINTENANCE TIME-LIMIT SETTING UNIT)
62 NECESSARY-TIME CALCULATION CIRCUIT
101, 102, 103 MAINTENANCE RECORD CREATION DEVICE

**Claims**

1. A maintenance record creation device for creating a maintenance record of an apparatus, the device comprising:

   a work data storage unit configured to store work data regarding work of the apparatus;
   an abnormality determination unit configured to determine an abnormality of the apparatus according to the work data to notify a user of the abnormality; and
   a maintenance record creation unit configured to create the maintenance record indicating that maintenance has been made for the abnormality according to the work data.

2. The maintenance record creation device according to claim 1, further comprising a maintenance time-limit setting unit configured to set a maintenance time-limit by which the maintenance is completed depending on a type of the abnormality of the apparatus,
   wherein the maintenance record creation unit creates the maintenance record when the maintenance has been made within the maintenance time-limit set for the corresponding type of the abnormality in accordance with the type of the abnormality of the apparatus determined by the abnormality determination unit.

3. The maintenance record creation device according to claim 1 or 2, wherein the maintenance record creation unit determines that the maintenance has been made when detecting that a drive mode of the apparatus is shifted from a normal drive mode in which the apparatus operates in a normal state to another drive mode other than the normal drive mode in accordance with the work data.

4. The maintenance record creation device according to claim 3, wherein the other drive mode includes at least either a stop mode in which the apparatus is in a stopped state or a maintenance mode for executing the maintenance of the apparatus.

5. The maintenance record creation device according to claim 3 or 4, wherein the maintenance record creation unit detects a continuous operating time in which the apparatus is continuously operated in the other drive mode, and determines whether the maintenance has been made in accordance with the continuous operating time.

6. The maintenance record creation device according to claim 5, wherein the maintenance record creation unit sets a necessary time required for the maintenance for each type of the abnormality, and wherein the maintenance record creation unit determines that the maintenance has been made when the continuous operating time in the other drive mode exceeds the necessary time.

7. The maintenance record creation device according to claim 6, wherein the maintenance record creation unit acquires sensor data detected by a sensor mounted on the apparatus, and sets the necessary time in accordance with the sensor data.

8. The maintenance record creation device according to claim 6 or 7, wherein the abnormality determination unit notifies the user of the necessary time when the abnormality of the apparatus is determined.

9. The maintenance record creation device according to any one of claims 1 to 8, further comprising a maintenance record database configured to store the maintenance record of the apparatus,

wherein the maintenance record creation unit presents, to the user, a storage confirmation notification urging to store the created maintenance record in the maintenance record database or a storage completion notification notifying that the maintenance record has been stored in the maintenance record database.

10. The maintenance record creation device according to any one of claims 1 to 9, wherein the maintenance record creation unit presents, to the user, the created maintenance record when the apparatus starts operating again after the work of the apparatus is stopped.

11. The maintenance record creation device according to any one of claims 1 to 10, wherein the apparatus is a speed reducer mounted on a robot.

12. The maintenance record creation device according to any one of claims 1 to 11, wherein the maintenance includes a repair of the apparatus and a replacement of the apparatus.

13. A maintenance record creation method for creating a maintenance record of an apparatus, the method comprising:

storing work data regarding work of the apparatus;
determining an abnormality of the apparatus according to the work data to notify a user of the abnormality having been determined; and
creating the maintenance record indicating that maintenance has been made for the abnormality according to the work data.

# FIG. 1

101(102,103)

- 40 MANUFACTURING ROBOT
- 13 SENSOR DB
- 11 WORK HISTORY DB
- 15 CPU
- 50 UI
- 12 ABNORMALITY DETERMINATION DB
- 16 MEMORY
- 14 MAINTENANCE RECORD DB

EP 3 783 544 A1

## FIG. 2

MANUFACTURING ROBOT — 40

- COMMUNICATION CIRCUIT — 41
- MEASUREMENT CIRCUIT — 42
- SENSOR — 43
- SPEED REDUCER — 44

UI — 50

- MAINTENANCE RECORD CONFIRMATION SWITCH — 51
- DISPLAY DEVICE — 52

MAINTENANCE RECORD CREATION DEVICE — 101

- COMMUNICATION CIRCUIT — 21
- MAINTENANCE RECORD DB — 14
- SENSOR DB — 13
- WORK HISTORY DB — 11
- ABNORMALITY DETERMINATION CIRCUIT — 22
- ABNORMALITY DETERMINATION DB — 12
- DB CHECK CIRCUIT — 23
- MAINTENANCE RECORD CREATION CIRCUIT — 24

— 15

EP 3 783 544 A1

# FIG. 3

```
        ( START )
            |
            |            S11
            ↓
┌───────────────────────────┐
│   OUTPUT OF ABNORMALITY    │
│   DETERMINATION ALARM      │
└───────────────────────────┘
            |
            |            S12
            ↓
┌───────────────────────────┐
│     INSTRUCTIONS URGING    │
│    MAINTENANCE OF ROBOT    │
└───────────────────────────┘
            |
            ↓
        ( END )
```

# FIG. 4

```
        ( START )
            |
            |            S31
            ↓
┌───────────────────────────┐
│        STOP ROBOT          │
└───────────────────────────┘
            |
            |            S32
            ↓
┌───────────────────────────┐
│       SET ROBOT TO         │
│     MAINTENANCE MODE       │
└───────────────────────────┘
            |
            |            S33
            ↓
┌───────────────────────────┐
│     EXECUTE MAINTENANCE    │
└───────────────────────────┘
            |
            |            S34
            ↓
┌───────────────────────────┐
│        SET ROBOT TO        │
│     NORMAL DRIVE MODE      │
└───────────────────────────┘
            |
            ↓
        ( END )
```

# FIG. 5

START

S51

ANALYZE EACH DATA OF
ABNORMALITY DETERMINATION DB,
MAINTENANCE RECORD DB,
AND WORK HISTORY DB

S52

MATCHED DATA
PRESENT?　　　　NO

YES

S53

AUTOMATICALLY CREATE
MAINTENANCE RECORD

S54

CONFIRMATION OF
MAINTENANCE RECORD BY USER

S55

ALREADY EXECUTED?　　　NO

YES

S56

STORE MAINTENANCE RECORD IN
MAINTENANCE RECORD DB

END

# FIG. 6

MAINTENANCE OPERATION HAS BEEN AUTOMATICALLY DETECTED.
EXECUTED THE FOLLOWING MAINTENANCE YET?

| MAINTENANCE COMPLETED | MAINTENANCE UNCOMPLETED |
|---|---|
| •STORING THE FOLLOWING MAINTENANCE LOGS<br>•ABNORMALITY TYPE: SPEED REDUCER<br>•MAINTENANCE CONTENTS: REPLACEMENT OF SPEED REDUCER<br>•MAINTENANCE COMPLETION DATE AND TIME: 2018/03/23 AM11:30 | •RETURNING TO MAIN MENU WITHOUT RECORDING MAINTENANCE LOGS |

# FIG. 7

| TYPE OF ABNORMALITY | MAINTENANCE MODEL | | | |
|---|---|---|---|---|
| | NECESSARY MAINTENANCE | DRIVE MODE DURING MAINTENANCE | TIME NECESSARY FOR MAINTENANCE | TIME LIMIT BY MAINTENANCE COMPLETION |
| ABNORMALITY OF SPEED REDUCER | REPLACEMENT OF SPEED REDUCER | MAINTENANCE MODE (1) | FOUR HOURS OR LONGER | ONE MONTH |
| ABNORMALITY OF GREASE OF SPEED REDUCER | CHANGE OF GREASE IN SPEED REDUCER | MAINTENANCE MODE (2) | ONE HOUR OR LONGER | TWO WEEKS |

EP 3 783 544 A1

## FIG. 8

# FIG. 9

MAINTENANCE RECORD CREATION DEVICE — 103

MANUFACTURING ROBOT — 40

COMMUNICATION CIRCUIT — 41

MEASUREMENT CIRCUIT — 42

SENSOR — 43

SPEED REDUCER — 44

UI — 50

MAINTENANCE RECORD CONFIRMATION SWITCH — 51

DISPLAY DEVICE — 52

MAINTENANCE RECORD DB — 14

COMMUNICATION CIRCUIT — 21

SENSOR DB — 13

WORK HISTORY DB — 11

ABNORMALITY DETERMINATION CIRCUIT — 22

ABNORMALITY DETERMINATION DB — 12

NECESSARY-TIME CALCULATION CIRCUIT — 62

DB CHECK CIRCUIT — 23

MAINTENANCE RECORD CREATION CIRCUIT — 24

15

EP 3 783 544 A1

18

## INTERNATIONAL SEARCH REPORT

| | |
|---|---|
| | International application No. |
| | PCT/JP2018/016073 |

**A. CLASSIFICATION OF SUBJECT MATTER**
Int.Cl. G06Q10/00(2012.01)i

According to International Patent Classification (IPC) or to both national classification and IPC

**B. FIELDS SEARCHED**

Minimum documentation searched (classification system followed by classification symbols)
Int.Cl. G06Q10/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2005-162212 A (TOKIKO TECHNO KK) 23 June 2005, paragraphs [0012], [0046], fig. 5<br>(Family: none) | 1, 9-13<br>2-8 |
| Y<br>A | JP 2006-268208 A (NEC CORPORATION) 05 October 2006, paragraphs [0001], [0022]-[0023], [0027], fig. 3, 4<br>(Family: none) | 1, 9-13<br>2-8 |
| Y<br>A | 久保田 由美恵, IoT活用技術 ～MOTOMAN Cockpit の開発～, 技報安川電機, 20 December 2016, vol. 80, no. 3, pp. 135-138, ISSN:0918-242X, (KUBOTA, Yumie, IoT utilization technology -The development of MOTOMAN Cockpit-, YASKAWA Technical Review) | 11<br>2-8 |

☐ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search<br>13.07.2018 | Date of mailing of the international search report<br>24.07.2018 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003137079 A